# EUROPEAN PATENT APPLICATION

(11) **EP 2 213 704 A1**
(43) Date of publication of application: **04.08.2010**
(21) Application number: 10151997.3
(22) Date of filing: 28.01.2010
(51) Int. Cl.: C08L 95/00

(54) **Process for continuous preparation of submicronic bitumen emulsions**

(30) Priority: 28.01.2009 ES 200900243
(71) Applicant: Repsol YPF, S.A., 28046 Madrid (ES)
(72) Inventor: PAEZ DUEÑAS, Antonio, 28224, Pozuelo de Alarcón (ES); MORENO MARTINEZ, Emilio, 28018, Madrid (ES); ROMERO PALAZON, Eduardo, 28935, Móstoles (ES); BARDESI ORUE-ECHEVARRIA, Alberto, 28220, Majadahonda (ES); MARTINEZ BOZA, Francisco Jose, 21006, Huelva (ES); PARTAL LOPEZ, Pedro, 21002, Huelva (ES); NAVARRO DOMINGUEZ, Francisco Javier, 21002, Huelva (ES); GALLEGOS MONTES, Crispulo, 21459, Cartaya (Huelva) (ES)
(74) Representative: Pons Ariño, Angel

(57) **Abstract**

Process for the continuous preparation of bituminous emulsions with an average particle size of less than one micron using emulsification by phase inversion in a combination of low-shear static mixers and high-shear homogenisers. The invention also refers to the bituminous emulsions obtained and their application to the construction and/or maintenance of roads.

## Description

The present invention relates to a continuous direct production method of bitumen emulsions from bitumen (o/w) with an average volumetric size (D_{4,3}) of less than 1 µm, preferably between 0.1 and 0.9 µm. The size of the particle desired can be controlled by selecting the plant operational conditions, such as feed rates, shear chamber volumes, homogenisation speeds, etc. The o/w emulsions obtained in this way are also characterised by very narrow particle size distributions (with not marked polydispersion), which improves their stability on storage.

### STATE OF PRIOR ART

In the sphere of the road laying industry, there are two techniques for the preparation of bituminous mixtures: the so-called "hot bitumen" technique, in which both the mineral components and the asphaltic binders are heated for manufacture and use of the bituminous mixture, and the "bitumen foaming" technique, in which the mineral components are applied in the cold. The latter mainly include dense mixtures, semi-dense mixtures, open mixtures, emulsion-aggregate mixtures, cold bituminous mixtures and superficial treatments. The interest in cold techniques lies in their lower energy costs and environmental advantages. This is the technical sphere to which this invention belongs.

Bituminous emulsions have been used for more than 70 years, mostly in civil works, construction and maintenance of roads, roofs and walls, waterproofing, etc. Water-based bituminous emulsions, stable dispersion of a hydro carbonated binder in water, can be presented in one of four forms: cationic, anionic, non-ionic and amphoteric, depending on the chemical nature of the emulsifier that is added to the aqueous phase.

The anionic emulgents have generally been long chain fatty acid soaps. These systems have the disadvantage that the adhesion to stone material is rather poor. Cationic emulsifiers, generally fatty acids, have the advantage of wider use.

Specifically, the use of emulsions in the submicron range can have various applications, such as priming of roads, due to their ease of penetration into the granular bed related to the small particle size and low viscosity of the emulsion. The small particle size together with a highly mono-dispersed character also results in these emulsions having improved stability during storage.

Traditionally, bitumen emulsions have been obtained by both continuous and batch processes in colloid mills, rotor-stators and homogenisers as described in patents DE3818453 and US4773883. In these equipments, both the oil phase (bitumen) and the water phase are added at the same time (all at once) and are passed through a high-speed agitation chamber. This method is known as "direct emulsification" due to the high shear and in general particle size is reduced by increasing the energy of agitation. Thus the corresponding emulsions are currently prepared by hot injection. Generally, the bitumen is heated to a temperature over 120 °C while the continuous phase, usually water, is also heated to approximately 60 °C. The mixture of bitumen and the aqueous phase are injected into a turbine under a very high rate of agitation, of the order of 5,000 revolutions per minute and under a pressure that can reach up to 3 atmospheres. As a consequence of this type of treatment, bitumen emulsions generally have a concentration that does not exceed 70% in weight of bitumen, a significant average particle size (typically over 5 µm) and also high polydispersivity. Emulsions obtained in this way, with a broad particle size distribution, and therefore with a high number of large sized drops ("distribution tail") have limited storage stability.

The phase inversion emulsification method consists of the slow addition of a low-viscosity liquid into one of high viscosity obtaining an emulsion of the low-viscosity liquid in the higher viscosity liquid. At a specific critical concentration of the low-viscosity fluid an inversion of the emulsion occurs and an emulsion of the high-viscosity liquid forms in the lower viscosity liquid. An example of this method can be found in US5670087, in which emulsions of 2 to 50 µm can be obtained in low shear devices.

To obtain emulsions with a particle size of less than 1 µm (submicron range), low-shear batch mixers of the agitation tank variety are used, where high mixing times enable production of emulsions with a particle size less than 1 µm after phase inversion. Examples of this method can be found in US2006/0086288A1, EP0999890 and WO2007/074225A1. US6951891 B2 also describes a method for obtaining submicron emulsions by phase inversion that requires the use of separation membranes. This method, in addition to the problems of fouling the membranes, involves high pumping costs.

In summary, all the processes described for obtaining emulsions by the phase inversion method require batch low-shear mixers and long preparation times to obtain submicron bitumen emulsions, and so the yield of these processes is poor.

### DESCRIPTION OF THE INVENTION

The present invention refers to a continuous process for obtaining bitumen emulsions in water (o/w) with a particle size of less than 1 micron that is based on the combined use of low and high-shear mixers. Thus, for continuous preparation of submicron bitumen emulsions, the phase inversion emulsification method must be carried out with a combination of static low-shear mixers and high-shear homogenisers.

The combination of low and high-shear mixers enables the preparation of emulsions with an average volumetric particle diameter (D 4,3) of less than one micron, with a plant production capacity equivalent to those traditionally used in direct emulsification. Using the process described here, emulsions with a very narrow particle size distribution are obtained, without appreciable "tails" and therefore with improved stability. Using the process of the present invention, the yield of bituminous emulsions is also improved.

Therefore, a first aspect of the present invention refers to a process for continuous preparation of bituminous emulsions (o/w) with an average particle size of bitumen of less than one micron, **characterised in that** the emulsification by phase inversion is performed with a combination of static low-shear mixers and high-shear homogenisers (hereinafter designated the process of the invention).

When "emulsification by phase inversion" is mentioned in the present invention, it refers to the slow addition of a low-viscosity liquid to a high-viscosity liquid under combined conditions of high and low-shear, obtaining an emulsion of the lower viscosity liquid in the higher viscosity liquid, in this case w/o, and at a specific critical concentration of the low-viscosity fluid an inversion of the emulsion takes place to o/w.

The low-shear mixers can be agitation tanks or static mixers. Non-limiting examples of static mixers are those manufactured under the commercial names including Sulzer, Kenics and Ross. If static mixers are used, these should be of sufficient length, always with more than six mixing elements.

To carry out the process of the invention, a single low-shear element may be used or several elements together in series and/or parallel and/or series-parallel configurations with any combination of agitating tanks and static mixers.

The high-shear dispersion device can be any of the in-line emulsifiers that are traditionally used in direct emulsification such as colloidal mills, rotor-stator turbines, homogenisers or high-shear multi-chamber emulsifiers.

An emulsion of water in bitumen is produced using the high-shear emulsification system that later is converted into an emulsion of bitumen in water by the series of low-shear static mixers. Also, if desired, the low-shear mixers can be used before the high-shear mixers to create a pre-mixture that reduces the drop particle size of bitumen of the final emulsion.

The temperature to carry out the process of the invention is variable, depending on the stage, and is between 50 ºC and 180 ºC. As regards pressure, the process can be carried out at atmospheric pressure, although it is advisable to carry out the process at a pressure equal to or higher than 1 bar and preferably between 2 and 4 bar.

Therefore, the process of the invention can be carried out in two or more stages.

One preferred embodiment of the process of the invention comprises the following two stages:
(a) in a first stage, asphaltic bitumen or modified bitumen, called the bituminous fraction, preferably at a temperature of between 50 ºC and 180 ºC, and an aqueous solution, preferably at a temperature of between 25 ºC and 110 ºC is passed through one or more high-shear dispersion devices. The aqueous fraction contains an emulsifier or mixtures of emulsifiers that is between 5% and 35% by weight, all the components adding to 100%. The ratio of the aqueous solution to the bituminous fraction is between 0.05 and 0.3. In this way, an emulsion of water in bitumen is obtained.
(b) in the second stage, the emulsion obtained in the first stage (a) is mixed in one or more low-shear dispersion devices, with an aqueous solution, preferably at a temperature of between 10 ºC and 95 ºC, that can contain an emulsifier or mixture of emulsifiers with a concentration by weight of between 0% and 5% and a ratio such that the final content of the bituminous fraction is between 10% and 70% and that of the emulsifier is between 0.01% and 10%, more preferably between 0.05% and 5% by weight of the total emulsion.

Another preferred embodiment of the process of the present invention comprises carrying out said process in three stages, in this way obtaining a smaller particle size than when the process of the invention is carried out in two stages. One or more low-shear dispersion mixer devices are placed in front of the high-shear dispersion device through which the bituminous fraction, preferably at a temperature of between 50 ºC and 180 ºC, and an aqueous solution, preferably at a temperature of between 25 ºC and 110 ºC, is to be passed. The aqueous fraction contains emulsifier or a mixture of emulsifiers, which is preferably in a proportion of between 5% and 35% in weight of this fraction. The ratio between the aqueous solution and bituminous fraction is preferably between 0.05 and 0.3. In this way, an emulsion of water in bitumen is obtained that, in a second stage, is fed into the high-shear dispersion device that homogenises the emulsion of water in bitumen, reducing the water drop particle size. In the third stage, the water in oil emulsion obtained in the previous stage is mixed in one or more low-shear mixer with an aqueous solution, preferably at a temperature of between 10 ºC and 95 ºC, which can contain an emulsifier or mixture of emulsifiers with a concentration by weight of between 0% and 5% and a ratio such that the final content of the bituminous fraction is between 30% and 70% and that of the emulsifier is between 0.01% and 10%, preferably between 0.05% and 5% by weight of the total emulsion.

In order to ensure the stability of the system, the use of emulsifiers in the aqueous fraction of the first stage of the process of the invention is necessary. The emulsifier can be cationic, anionic, non-ionic, amphoteric or a mixture of these in any proportions, provided that they are not incompatible. Thus an anionic and cationic emulsifier must never be put together in a mixture. The total concentration of emulsifier is between 0.01% and 10% and preferably between 0.05% and 5% by weight of the total emulsion.

Cationic emulsifiers that can be used include salts of polyamines, diamines, aminoamines and fat imidazolines or mixtures of these, of which there are many products on the market.

To make the salt, they are reacted in aqueous medium with a mineral acid selected from the list comprising hydrochloric acid, hydrobromic acid, sulphuric acid, phosphoric acid or any mixture of these in a quantity such that the pH of the aqueous solution is between 1 and 7.

As regards the anionic emulsifiers, salts of Vinsol resin, tall oil or colophonium or a mixture of both, esters of sulphuric acid and its salts, preferably the alkyl sulphates, and derivatives of sulphonic acids such as the sodium salts of the alkyl aryl sulphonates or those of alkyl sulphonates.

To make the salt of Vinsol resin, of tall oil and of colophonium, the emulsifier in aqueous medium is reacted with a base, such as for example, but without limitation, sodium hydroxide, potassium hydroxide or ammonium hydroxide until the pH of the aqueous solution is between 7 and 14.

Non-limiting examples of alkyl sulphates include sodium lauryl sulphate, sodium cetyl stearyl sulphate, ammonium lauryl sulphate and triethanolamine lauryl sulphate, either alone of mixed together in any proportion.

A non-limiting example of the derivatives of sulphonic acids is sodium dodecylbenzene sulphonate.

Non-ionic emulsifiers useful for this invention include the esters of glycol, glycerol, polyglyceryl esters, polyoxyethylated alkyl phenols and polyoxyethylated alcohols, either alone or mixed together in any proportion.

Amphoteric emulsifiers useful for this invention include the sulphobetaines, N-alkyl betaine, derivatives of beta-N-alkyl-amino-propionic acid and the derivatives of N-alkyl-beta-imido-propionic acids.

In order to manufacture the emulsions of this invention, any type of asphaltic bitumen can be used. It is sufficient to cite the bitumens from vacuum distillation units, de-asphalting units or visbreaking units from oil refining operations.

Bitumens modified with polymers can also be used. Non-limiting examples of bitumens include SBS, SBR, EVA, polyethylene, EPDM (ethylene propylene diene monomer rubber), either alone or mixed together in any proportion.

Fluidified bitumens can also be used in place of asphaltic bitumen. Fluidified bitumens are manufactured by adding a fluidifier to a bitumen in a proportion of between 0% and 20% by weight of the final bitumen. Fluidifiers are well known in the state of the art and come from both coal distillation and oil refining. These products have a distillation interval of between 60 ºC and 300 ºC, although those with a distillation interval of between 150 ºC and 250 ºC are preferable.

Another variant is adding aromatic cuts or fractions from oil refining operations to the bitumen, which provides the submicron emulsion with properties that are useful for recycling aged bituminous surfaces.

The percentage of asphaltic bitumen as such, modified with polymers, fluidified or mixed with aromatic cuts or fractions from oil refining operations is between 10% and 70% by weight of the total emulsion.

A second aspect of the present invention refers to a bituminous emulsion with an average particle size below one micron obtainable by the process of the invention and with a bituminous fraction content of between 10% and 70% by weight of the final emulsion and an emulsifier content of between 0.01% and 10% by weight with respect to the aqueous fraction. The emulsifier content is preferably between 0.05% and 5% by weight of the aqueous fraction.

In a preferred embodiment, the emulsion of the invention contains particles with an average size of between 0.1 µm and 0.9 µm.

Another aspect of the present invention refers to the use of bituminous emulsions for surfacing, that is for the construction and/or maintenance of roads.

Throughout the description and the claims, the word "comprise" and its variants does not intend to exclude other technical characteristics, additives, components or steps. For experts in the field, other objects, advantages and characteristics of the invention will become apparent from the description and from the practise of the invention. The following examples and figures are provided by way of illustration and are not intended to be limiting of the present invention.

### BRIEF DESCRIPTION OF THE FIGURES

**Fig. 1****.**- Shows the particle size distribution of the emulsion of example 1.
**Fig. 2****.**- Shows the particle size distribution of the emulsion of example 2.
**Fig. 3****.**- Shows the particle size distribution of the emulsion of example 3.
**Fig. 4**.- Shows the particle size distribution of the emulsion of example 4.
**Fig. 5****.-** Shows the particle size distribution of the emulsion of example 5.

### DETAILED DESCRIPTION OF METHODS OF EMBODIMENT

The invention is illustrated below with tests performed by the inventors that demonstrate the advantages of the claimed process.

### EXAMPLE 1. Preparation of the emulsion by phase inversion using only low-shear mixers

Table 1 shows the operational conditions and formulation of emulsions obtained by the phase inversion method using only low-shear mixers. The surfactant (emulsifier) used was CTAB (hexadecyl trimethyl ammonium bromide) at an initial concentration of 27%. Although the particle size distribution obtained was narrow (FIG, 1), the average particle size of the emulsion was much greater than 1 µm (Table 1). However, this method can be used with bitumens of very different penetration properties.

**Table 1**

| **Test** | **Bitumen** | **Feed rate** | **Emulsion** **(solids)** | **Temperature** **(°C)** | **D 3,2** | **D 4,3** |
|---|---|---|---|---|---|---|
| A | 150/200 | 0.11 | 55% | 104 | 4.665 | 7.443 |
| B | 80/100 | 0.11 | 65% | 104 | 5.088 | 8.262 |

| | | | | | | |
|---|---|---|---|---|---|---|
| where: D 4,3 is the average diameter of emulsion particles, using the total weight of the particles as the base for calculation; D 3.2 is the average diameter of emulsion particles, using the total surface area of the particles as the base for calculation; Bitumen 150/200 is a bitumen that has a penetration of between 150 and 200 1 /10 mm, according to the EN 1426 standard; Bitumen 80/100 is a bitumen that has a penetration of between 80 and 100 1 /10 mm, according to the EN 1426 standard; rpm refers to the agitation speed of the high-shear element in revolutions per minute. | | | | | | |

### EXAMPLE 2. Preparation of the emulsion by phase inversion in two stages in accordance with the process of the present invention, using the same emulsifier of Example 1.

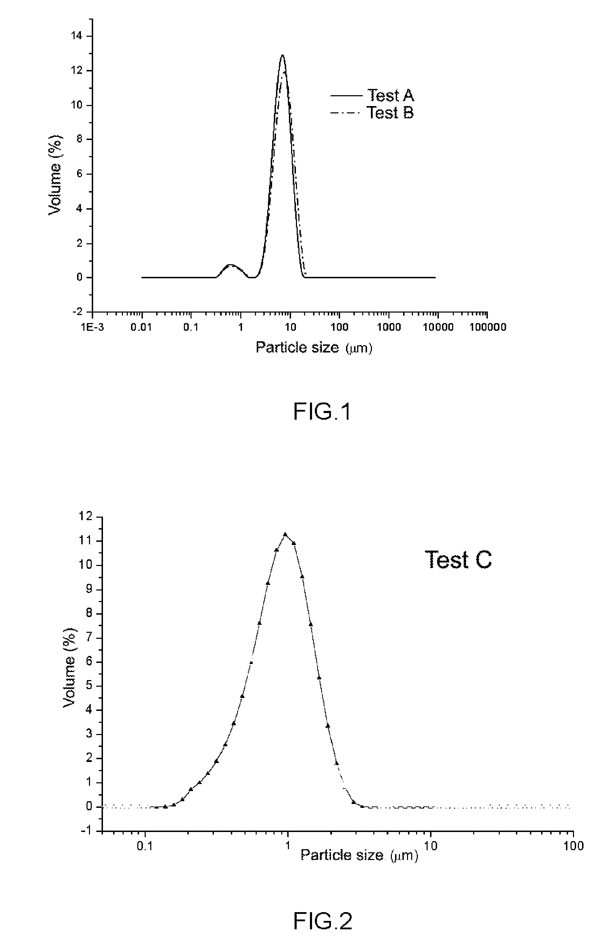

Table 2 shows the operational conditions and formulation of the emulsion obtained by the phase inversion method using only one high-shear dispersion device and a low-shear mixer for the inversion to the o/w emulsion. The surfactant (emulsifier) used was CTAB (hexadecyl trimethyl ammonium bromide) at an initial concentration of 27%. As can be seen (FIG. 2), both the distribution and the average particle size are less than that of Example 1.

**Table 2**

| **TEST** | **Bitumen** | **Feed rate** | **Emulsion** **(solids)** | **Temperature** **(°C)** | **rpm** | **D 4,3** |
|---|---|---|---|---|---|---|
| C | 150/200 | 0.2 | 55% | 104 | 10,000 | 0.796 |

| | | | | | | |
|---|---|---|---|---|---|---|
| where: D 4,3, Bitumen 150/200 and rpm have the same meanings as for Table 1. | | | | | | |

### EXAMPLE 3. Preparation of the emulsion by phase inversion in two stages in accordance with the process of the present invention, using a different emulsifier to that of Example 2.

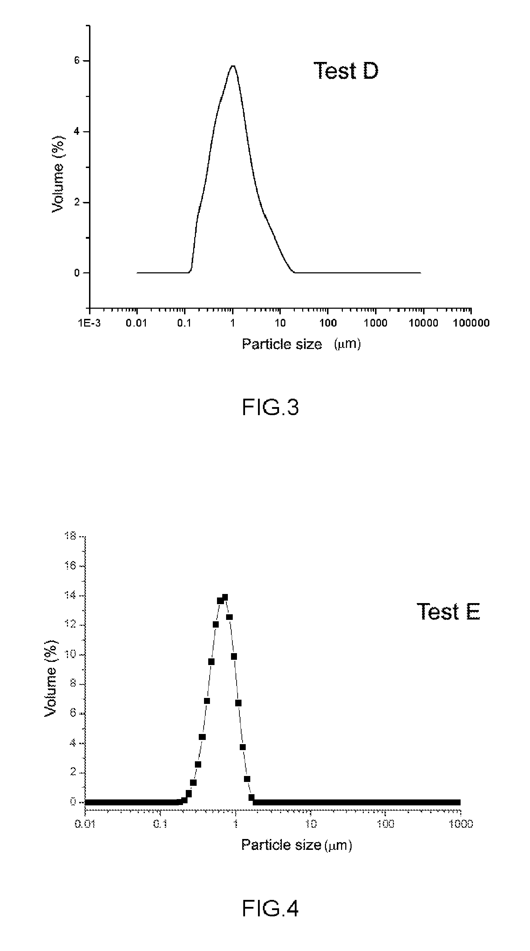

Table 3 shows the operational conditions and formulation of the emulsion obtained by the phase inversion method using only one high-shear dispersion device and one low-shear mixer for the inversion to the o/w emulsion. The surfactant (emulsifier) used was sodium dodecylbenzene sulphonate at an initial concentration of 20%. As can be seen in FIG. 3, on changing the emulsifier, the size distribution of the particles remained low.

**Table 3**

| **TEST** | **Bitumen** | **Feed rate** | **Emulsion** **(solids)** | **Temperature** **(°C)** | **rpm** | **D 4,3** |
|---|---|---|---|---|---|---|
| D | 150/200 | 0.2 | 55% | 104 | 10,000 | 0.83 |

| | | | | | | |
|---|---|---|---|---|---|---|
| where: D 4,3, Bitumen 150/200 and rpm have the same meanings as for Table 1. | | | | | | |

### EXAMPLE 4. Preparation of the emulsion by phase inversion in three stages according to the process of the invention and with an emulsifier different to that of Example 3 and the same to those of Examples 1 and 2.

Table 4 shows the operational conditions and formulation of the emulsion obtained by the phase inversion method in three stages, using an arrangement of low-shear mixers and high-shear dispersion devices in series. The surfactant (emulsifier) used was CTAB (hexadecyl trimethyl ammonium bromide) at an initial concentration of 27%. As can be seen (FIG. 4), both the distribution and the average particle size are lower than those of examples 1 and 2, and the particle size distribution is narrower. The results indicate the advantage of using three stages in accordance with a preferred embodiment of the invention.

**Table 4**

| **TEST** | **Bitumen** | **Feed rate** | **Emulsion** **(solids)** | **Temperature** **(°C)** | **rpm** | **D 4,3** |
|---|---|---|---|---|---|---|
| E | 150/200 | 0.11 | 55% | 118 | 10,000 | 0.62 |

| | | | | | | |
|---|---|---|---|---|---|---|
| where: D 4,3, Bitumen 150/200 and rpm have the same meanings as for Table 1. | | | | | | |

### EXAMPLE 5. Preparation of the emulsion by phase inversion in three stages according to the preferred process and with a different emulsifier to that used in Examples 1 to 4.

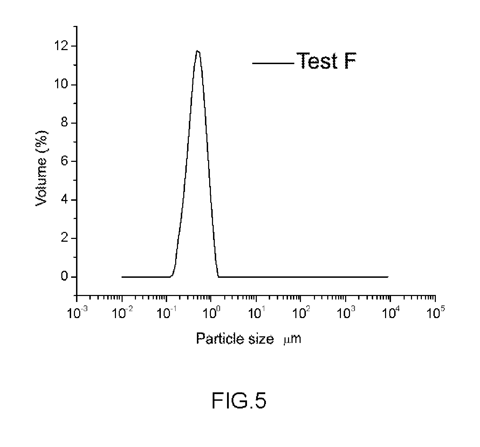

Table 5 shows the operational conditions and formulation of the emulsion obtained by the phase inversion method in three stages, using an arrangement of low-shear mixers in series and high-shear dispersion devices. The surfactant (emulsifier) used was sodium lauryl sulphate at an initial concentration of 14%. In this case, an average particle size of the emulsion (Table 5) was lower than that obtained in Examples 2 and 3 and the particle size distribution was also narrower (FIG. 5). In this example, the feed rate flow was doubled to that used in Example 1 to increase the plant capacity.

**Table 5**

| **TEST** | **Bitumen** | **Feed rate** | **Emulsion** **(solids)** | **Temperature** **(°C)** | **rpm** | **D 4,3** |
|---|---|---|---|---|---|---|
| F | 150/200 | 0.11 | 55% | 118 | 10,000 | 0.56 |

| | | | | | | |
|---|---|---|---|---|---|---|
| where: D 4,3, Bitumen 150/200 and rpm have the same meanings as for Table 1. | | | | | | |

## Claims

1. Process for the continuous preparation of bituminous emulsions with an average particle size of less than one micron, **characterised in that** emulsification is performed by phase inversion using a combination of low-shear static mixers and high-shear homogenisers.

2. Process according to claim 1 comprising the following steps:
a. passing a bituminous fraction and an aqueous fraction through one or more high-shear mixers, obtaining a water in bitumen (w/o) type emulsion;
b. continuously inverting the emulsion obtained in step (a) to a bitumen in water (o/w) type emulsion by the addition of an aqueous solution in one or more low-shear mixers.

3. Process according to claim 1 comprising the following steps:
a. passing the bituminous fraction and the aqueous fraction through one or more low-shear mixers followed by the combined use in series of one or more high-shear mixers, obtaining a water in bitumen (w/o) type emulsion;
b. continuously inverting the emulsion obtained in step (a) to a bitumen in water (o/w) type emulsion by the addition of an aqueous solution in one or more low-shear mixers.

4. Process according to any of the claims 2 or 3 where the bituminous fraction of step (a) is added at a temperature of between 50 ºC and 180 ºC and the aqueous solution is added at a temperature of between 25 ºC and 110 ºC.

5. Process according to any of the claims 2 to 4 where the aqueous fraction contains at least one emulsifier in a proportion of between 5% and 35% with respect to the total weight of the fraction.

6. Process according to any of the claims 2 to 5 where the aqueous solution of step (b) contains at least one emulsifier and is at a temperature of between 10 ºC and 95 ºC.

7. Process according to any of the claims 1 to 6 where the low-shear mixers are agitated tanks and/or static mixers that have more than six elements and are configured in series and/or parallel and the high-shear mixers are selected from a list comprising colloidal mills, turbines, rotor-stators, homogenisers and multi-chamber homogenisers, or any combination of these in series and/or parallel configurations.

8. Process according to any of the claims 1 to 7 where the process is carried out at a pressure equal to or higher than 1 bar, preferably at a pressure of between 2 and 4 bar.

9. Process according to any of the claims 2 to 8, **characterised in that** the bituminous fraction is asphaltic bitumen or bitumen modified with a polymer, a fluidiser, aromatic cuts or fractions from oil refining operations or combinations of any of these.

10. Process according to claim 9 where the polymer is selected from a list comprising SBS, SBR, EVA, polyethylene, EPDM or any combinations of these.

11. Process according to any of the claims 1 to 10 where the emulsifier is cationic, non-ionic, amphoteric or a mixture of these in any proportion or anionic, non-ionic, amphoteric or a mixture of these in any proportion.

12. Process according to claim 11 where the emulsifier is anionic and is selected from a sulphuric acid ester and its salts or a derivative of sulphonic acids selected from an alkyl sulphate or an alkyl aryl sulphonate.

13. Process according to claim 11 where the emulsifier is non-ionic and is selected from a list comprising glycol ester, glycerol ester, polyglyceryl ester, polyoxyethylenated alkyl phenol and polyoxyethylenated alcohol, either alone or mixed together in any proportion.

14. Process according to claim 11 where the emulsifier is amphoteric and is selected from the list comprising sulphobetaines, N-alkyl betaine, a derivative of beta-N-alkyl-amino-propionic acid and a derivative of the N-alkyl-beta-imido-propionic acids.

15. Bituminous emulsion obtainable by the process according to any of the claims 1 to 14 with a bituminous fraction content of between 10% and 70% by weight of the final emulsion, and an emulsifier content of between 0.01% and 10% by weight of the aqueous fraction.

16. Use of the bituminous emulsion of claim 15 for the construction and/or maintenance of roads.
